# FASCICULE DE BREVET EUROPEEN

(11) **EP 3 555 999 B1**
(45) Date de publication et mention de la délivrance du brevet: **10.11.2021**
(21) Numéro de dépôt: 17826302.6
(22) Date de dépôt: 15.12.2017
(51) Int. Cl.: H02K 33/02

(54) **BOBINE POUR POMPE ÉLECTROMAGNÉTIQUE**
SPULE FÜR ELEKTROMAGNETISCHE PUMPE
COIL FOR ELECTROMAGNETIC PUMP

(30) Priorité: 15.12.2016 CH 16592016
(43) Date de publication de la demande: 23.10.2019
(73) Titulaire: Gotec SA, 1958 St-Léonard (CH)
(72) Inventeur: NANCHEN, Vincent, 3979 Grône (CH)
(74) Mandataire: P&TS SA (AG, Ltd.)
(86) Numéro de dépôt international: PCT/IB2017/058011
(87) Numéro de publication internationale: WO 2018/109741

(56) Documents cités:
- WO-A2-2016/073128
- DE-A1-102007 052 224
- JP-U- S5 494 810
- US-A1- 2001 005 166
- US-A1- 2005 019 181
- US-A1- 2008 218 004
- US-A1- 2014 026 836

## Description

### Domaine technique

La présente invention concerne le domaine des pompes électromagnétiques et des bobines pour pompes électromagnétiques.

### Etat de la technique

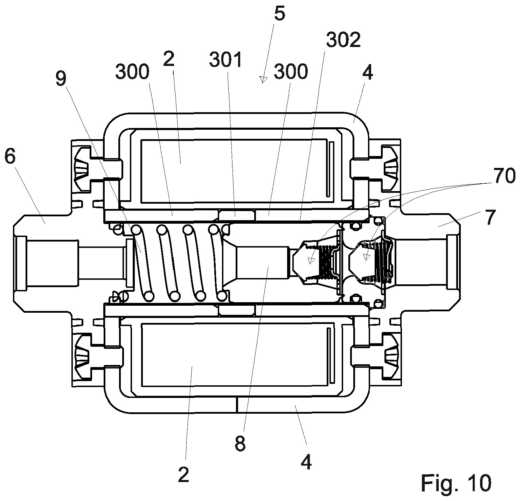

Un exemple de pompe électromagnétique 5 est illustré sur la figure 10. De manière conventionnelle, la pompe illustrée comporte un conduit d'amenée de fluide 6 en amont de la pompe, un conduit de sortie de fluide 7 en aval de la pompe, et un piston mobile 8 entre les deux conduits. Une bobine électromagnétique 2 crée un champ magnétique qui permet de déplacer le piston 8 dans un cylindre 302, à l'encontre de l'action d'un ressort 9, afin de produire un mouvement de pompage. Des exemples de telles pompes sont décrits par exemple dans les demandes de brevet WO2013152975 et WO2014177442 au nom de la demanderesse.

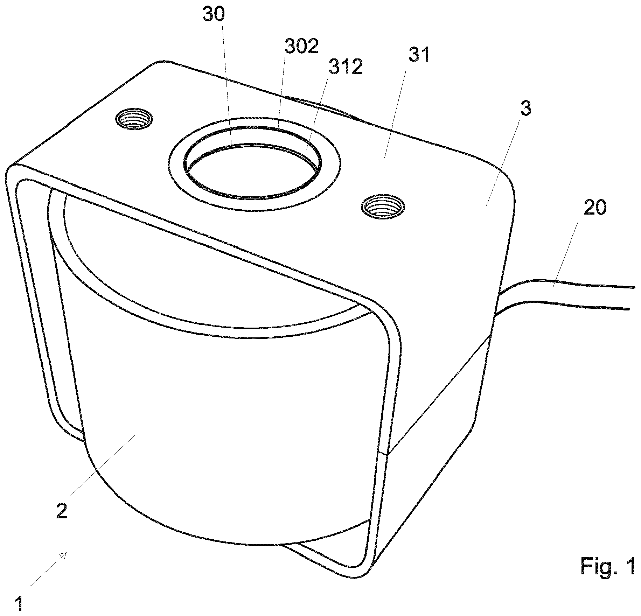

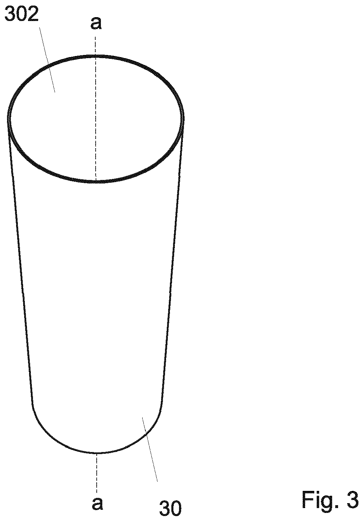

Un premier type de bobine 1 de l'art antérieur pour une pompe électromagnétique est illustré sur les figures 1 à 3. La bobine illustrée comporte un bobinage 2 formé par un fil conducteur enroulé autour d'un support cylindrique creux et dont la surface externe est protégée par un vernis ou un isolant. Un cadre (ou culasse) ferromagnétique créé un chemin magnétique autour de ce bobinage ; il comporte un noyau 30 formé d'une douille 30 illustrée sur la figure 3, et une boucle 31. La boucle permet de refermer le circuit magnétique aux deux extrémités du noyau 30. Le noyau 30 est inséré dans un trou axial 312 à travers deux côtés de la boucle et à travers le bobinage. Il comporte une ouverture 302 axiale servant de cylindre et dans laquelle un piston peut coulisser pour déplacer le fluide pompé.

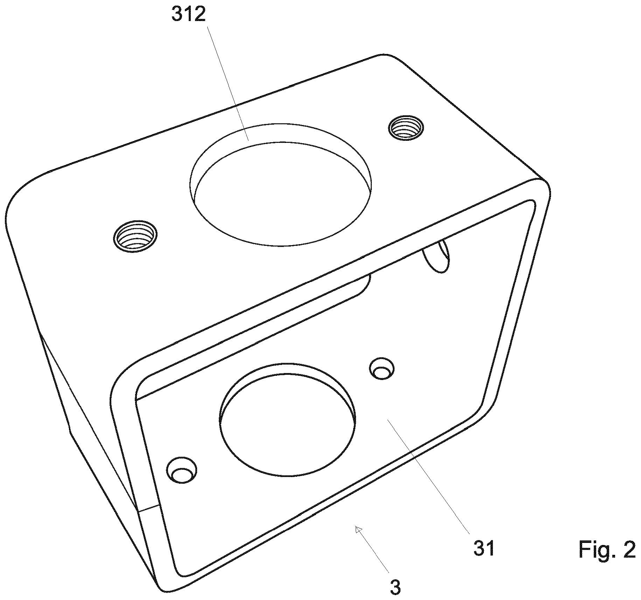

Dans ce type de bobine, le cadre est formé d'une tôle pliée et refermée sur elle-même, comme illustrée sur la figure 2. Le champ magnétique dans ce cadre crée des courants de Foucault qui produisent un échauffement rapide de ce cadre, et une détérioration de ses performances. Pour cette raison, le type de bobines illustré sur les figures 1 à 3 est destiné à être utilisé pour des pompes employées de manière intermittente, avec des durées de pompage qui typiquement n'excèdent pas une minute ; elles doivent ensuite s'arrêter pour refroidir, ou continuer de fonctionner avec un moins bon rendement.

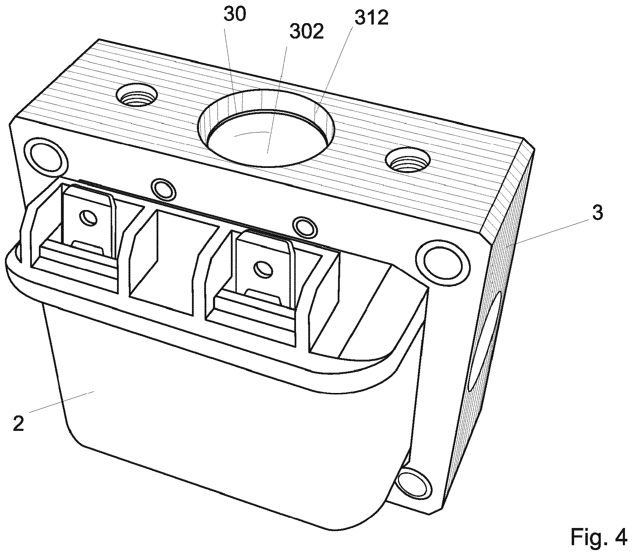

Un exemple de bobine 1 de l'art antérieur pour une pompe électromagnétique et qui convient à des durées d'utilisation plus grandes est illustré sur les figures 4 à 5. Dans ce mode de réalisation, le cadre 3 est réalisée par feuilletage de tôles parallèles à l'axe de la bobine, ce qui permet de réduire fortement les courants de Foucault et l'échauffement. Cette bobine convient donc également à des pompes utilisées de manière continue ou pendant des longues périodes.

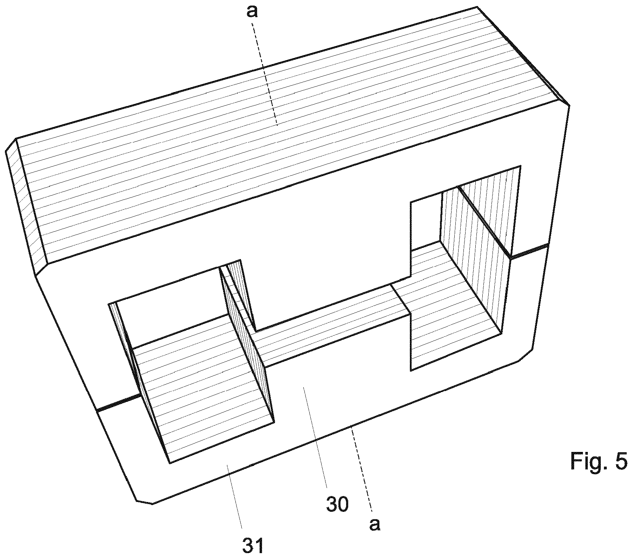

Le cadre feuilleté 3 des figures 4 et 5 est typiquement réalisé en assemblant deux éléments en E, qui sont disponibles commercialement. La branche intermédiaire plus courte des deux éléments forme un noyau 30 ménageant un entrefer dans la branche centrale, afin d'augmenter la reluctance de la bobine et de retarder la saturation. La dimension et la position de cet entrefer doivent être contrôlées précisément selon l'application désirée. Elles dépendent cependant d'un positionnement précis des deux demi-cadres l'une contre l'autre, qui est difficile à garantir de manière reproductible. Par ailleurs, le perçage du trou axial 302 pour le passage du piston à travers la branche centrale du cadre (noyau) est délicat, notamment lorsque les bords de ce trou doivent être revêtus pour garantir l'étanchéité du cylindre ou pour éviter le risque de contamination du liquide pompé. Pour toutes ces raisons, la fabrication de pompes électromagnétiques avec un cadre feuilleté est plus coûteuse que la fabrication à partir d'un cadre en tôle pliée.

La bobine illustrée sur ces figures 4 à 5 comporte un bobinage protégé par un capot ou un moulage présentant une section sensiblement carrée dans le plan transversal. Cette forme carrée facilite le montage de la pompe qui peut ainsi être placée ou fixée dans un logement de forme correspondante, sans risque de pivotement accidentel.

Le noyau 30 illustré sur le mode de réalisation des figures 4 et 5 présente également une section rectangulaire. Il est en effet difficile de réaliser un noyau feuilleté avec une section circulaire. Ce noyau de section carrée ne remplit qu'une portion de l'ouverture cylindrique dans le bobinage. Il en résulte un noyau de section réduite, qui chauffe inutilement, et des flux magnétiques parasites dans l'interstice entre le noyau 30 et l'ouverture à travers le bobinage.

Les bobines de ces deux exemples conviennent donc à des applications différentes, par exemple des pompes électromagnétiques plutôt bon marché, fonctionnant de manière intermittente ou avec un bas rendement, dans l'exemple des figures 1 à 3, et des pompes électromagnétiques plus coûteuses, aptes à fonctionner pendant des durées plus longues avec un échauffement moindre, dans le cas des figures 4 à 5. La nécessité pour un fabricant de pompes de proposer deux types de bobines différentes, qui se distinguent l'une de l'autre par le cadre, renchérit les coûts et complique la logistique.

Chacun de ces types de pompes doit en outre être produit selon différentes spécifications en fonction de l'application envisagée. Les pompes électromagnétiques sont par exemple fréquemment utilisées pour des applications dans le relevage du mazout, l'évacuation du condensat dans les refroidisseurs à air conditionné, les distributeurs de café telles que les machines à café, les appareils de nettoyage à eau sous pression, etc. Ces dispositifs requièrent différents compromis entre l'encombrement, la facilité de montage, et le prix. Par ailleurs, parmi d'autres facteurs, la puissance de pompage nécessaire, la durée d'utilisation, la course du piston qui doit être effectuée à chaque mouvement de pompage, le type de liquide qui doit être pompé, varient selon les applications. Un grand nombre de bobines différentes doivent donc être réalisées afin de proposer des pompes électromagnétiques adaptées à ces besoins variés. La fabrication et la distribution d'un nombre de modèles aussi important est coûteuse et complexe.

Le document DE102007052224 présente une bobine pour pompe électromagnétique conforme au préambule de la revendication 1.

### Bref résumé de l'invention

Il serait donc souhaitable de proposer une construction de bobine pour pompe électromagnétique qui soit plus polyvalente ou plus facile à adapter à ces différents besoins.

Un autre but de la présente invention est de proposer une bobine pour pompe électromagnétique à faible coût et faible échauffement.

Un autre but de l'invention est de proposer un procédé de fabrication de bobine pour pompe électromagnétique à faible coût et faible échauffement.

Selon l'invention, ces buts sont atteints notamment au moyen d'une bobine pour pompe électromagnétique, selon l'une des revendications 1 à 11..

Cette construction est avantageuse car le surmoulage muni d'ailettes de refroidissement permet d'évacuer efficacement la chaleur dégagée par la bobine et par les courants de Foucault dans le noyau et la boucle. Il est donc possible d'utiliser un cadre plus simple, par exemple un cadre au moins partiellement en tôle pliée, et moins volumineux, tout en évitant ou réduisant les problèmes de dégagement de chaleur que ces cadres présentaient dans l'art antérieur. Cela permet de réduire le nombre de types de bobines nécessaires, puisque des bobines avec un cadre simple peuvent, au moins pour certaines applications, être mises en oeuvre là où dans l'art antérieur des cadres feuilletés étaient impérativement nécessaires pour réduire le dégagement de chaleur.

Dans un mode de réalisation avantageux, la section du surmoulage dans un plan perpendiculaire à l'axe de la bobine correspond sensiblement à un carré avec des angles arrondis. On exploite ainsi avantageusement les volumes dans au moins certains coins du bobinage, qui sont utilisés pour y disposer des ailettes de refroidissement plus longues que dans les bords de ce bobinage.

Le surmoulage et le support cylindrique creux peuvent former un ensemble intégral, c'est-à-dire une seule pièce plastique fermée qui enrobe complètement les spires de la bobine, en la protégeant aussi de l'humidité.

La section du noyau dans un plan transversal (perpendiculaire à son axe) est de préférence circulaire. Il peut ainsi remplir entièrement le volume cylindrique à l'intérieur du support cylindrique creux. Cela permet de réduire les flux magnétiques parasites entre le noyau et les spires, ainsi que les problèmes d'échauffement grâce à un volume du noyau plus important.

Dans un mode de réalisation, le surmoulage peut comporter un logement pour un thermofusible ou pour un thermoswitch de protection du bobinage.

Dans un mode de réalisation, le surmoulage peut comporter un logement pour un connecteur amovible destiné au raccordement électrique de la bobine.

Ces logements peuvent être prévus dans un coin du surmoulage.

La boucle comporte avantageusement quatre branches formant un rectangle creux. Il est ainsi possible de la réaliser facilement en une seule pièce, sans besoins d'assemblage à partir de demi-cadres.

La section des branches de la boucle du cadre est avantageusement rectangulaire. Le cadre comporte ainsi une forme inhabituelle avec un noyau central de section circulaire et traversant une boucle rectangulaire et de section rectangulaire.

La boucle peut être feuilletée, pour des applications où la production de chaleur doit être réduite autant que possible.

La boucle peut être formée d'une tôle pliée refermée sur elle-même. Une évacuation de la chaleur suffisante pour de nombreuses applications est néanmoins obtenue grâce aux ailettes de refroidissement.

Un même bobinage peut être équipé au choix d'une boucle feuilletée ou d'une boucle formée d'une tôle pliée. Il est ainsi possible de réaliser un ensemble de bobinages identiques et de choisir au dernier moment lors du procédé de fabrication quelle boucle doit être employée, selon l'application.

Au moins une des branches du cadre est munie d'un trou traversant selon l'axe de la bobine. Le noyau peut être constitué par une douille cylindrique creuse insérée dans ce trou.

Le noyau peut être amovible, et réalisé indépendamment de la boucle.

Il est ainsi possible de prévoir une seule boucle et de l'équiper de différents noyaux, selon l'application.

Le noyau peut comporter deux douilles cylindriques creuses en matériau ferromagnétique disposées coaxialement et séparées l'une de l'autre par une douille coaxiale en matériau non ferromagnétique formant un entrefer.

L'invention a aussi pour objet une pompe électromagnétique comportant une telle bobine et un piston mobile à travers ledit noyau.

L'invention a aussi pour objet un procédé de fabrication de bobine selon la revendication 13.

Grâce au surmoulage muni d'ailettes de refroidissement, la bobine peut être utilisée dans un grand nombre d'applications différentes, y compris des applications impliquant un fonctionnement sur une longue durée.

Grâce à l'insertion du noyau au dernier moment, il est possible de choisir un noyau différent et adapté à chaque application, par exemple des noyaux avec des dimensions et/ou des positions d'entrefer et/ou des matériaux différents.

La présente invention a aussi pour objet un kit de montage de pompe électromagnétique, selon la revendication 14 ou selon la revendication 15.

### Brève description des figures

Des exemples de mise en oeuvre de l'invention sont indiqués dans la description illustrée par les figures annexées dans lesquelles :
- La figure 1 illustre un exemple de bobine pour pompe électromagnétique avec un cadre partiellement en tôle pliée et un bobinage conventionnel.
- La figure 2 illustre une boucle de cadre en tôle pliée.
- La figure 3 illustre un noyau de cadre ferromagnétique cylindrique creux, pouvant servir de cylindre pour une pompe électromagnétique.
- La figure 4 illustre un exemple de bobine pour pompe électromagnétique avec un cadre en tôles feuilletées et un bobinage conventionnel.
- La figure 5 illustre un cadre feuilleté selon l'art antérieure, y compris un noyau feuilleté à section carrée.
- La figure 6 illustre un fil conducteur enroulé sur un support cylindrique creux.
- La figure 7 illustre un bobinage surmoulé avec des ailettes de refroidissement.
- La figure 8 illustre un exemple de bobine pour pompe électromagnétique avec une boucle de cadre en tôle pliée et un noyau pas encore inséré dans cette boucle.
- La figure 9 illustre un exemple de bobine pour pompe électromagnétique avec une boucle de cadre feuilletée et un noyau pas encore inséré dans cette boucle.
- La figure 10 illustre une pompe électromagnétique pouvant être équipée d'une des bobines ci-dessus.

### Exemple(s) de mode de réalisation de l'invention

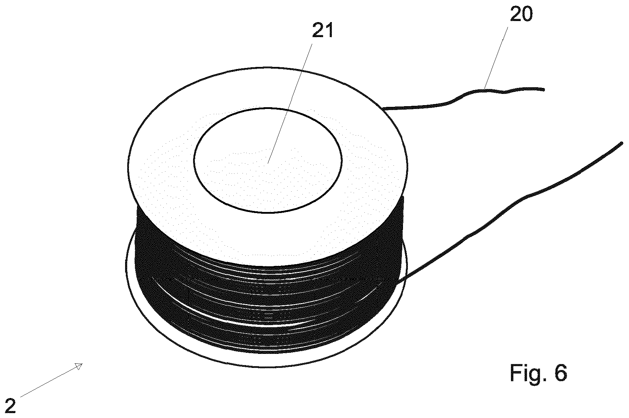

La figure 6 illustre un fil conducteur 20 enroulé autour d'un support cylindrique creux 21 en matière synthétique isolante. Cet élément est destiné à être surmoulé pour servir de bobinage dans la bobine décrite plus loin.

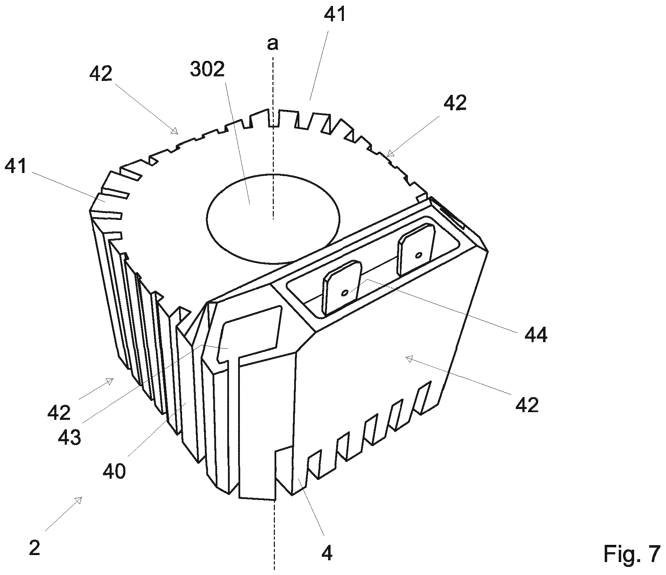

La figure 7 illustre le même élément que celui de la figure 6, mais revêtu d'un surmoulage 4 qui entoure complètement le fil conducteur en le protégeant et en évitant le risque d'électrocution. La section du surmoulage 4 dans le plan transversal à l'axe longitudinal a de la bobine correspond sensiblement à un carré aux angles arrondis, bien que la section de la portion de fil surmoulée soit sensiblement circulaire. Les bords surmoulés sont munis d'ailettes de refroidissement 40 radiales. La longueur de ces ailettes est plus grande dans au moins deux angles 41 qu'au milieu des bords 42, de manière à exploiter le volume à disposition entre les angles du carré et le volume de conducteur.

Un premier logement 43 est prévu pour un thermofusible ou un thermoswitch amovible qui permet de protéger le conducteur en cas de courant excessif. Un deuxième logement 44 est prévu pour des connecteurs électriques permettant d'alimenter le bobinage. Le fil conducteur 20 dans le surmoulage est relié en série aux bornes du thermofusible ou du thermoswitch dans le logement 43 et aux cosses de connexion dans le logement 44. Le logement 44 est de préférence étanche et empêche les infiltrations d'eau ou d'humidité à l'intérieur du surmoulage. Un trou axial traverse le bobinage surmoulé pour y insérer le noyau ferromagnétique, comme on le verra.

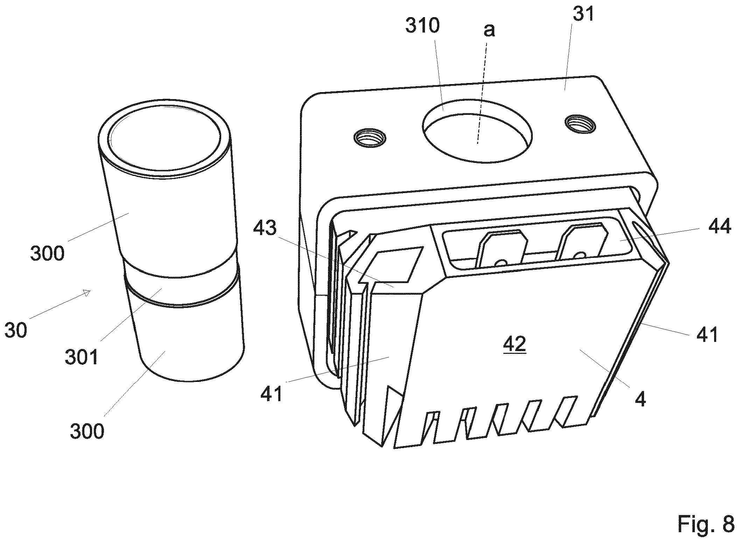

La figure 8 illustre un bobinage surmoulé 4 entouré par la boucle 31 en tôle pliée d'un cadre ferromagnétique 3, qui est refermée sur elle-même. Un trou 310 dans cette boucle 31 est aligné coaxialement avec le trou de la bobine surmoulée, et permet d'y insérer un noyau ferromagnétique 30 au centre du bobinage. La boucle de cet exemple présente une section rectangulaire. Elle peut comporter des trous pour fixer la bobine à d'autres composants, ou pour y fixer les conduits d'entrée et de sortie de fluide.

Le noyau ferromagnétique 30 a une forme cylindrique et est traversé par une ouverture formant un cylindre pour le déplacement du piston d'une pompe électromagnétique. Le noyau 30 comporte deux douilles 300 en matériau ferromagnétique et séparées par une douille 301 en matériau non ferromagnétique servant d'entrefer. La face interne du noyau peut être munie d'un revêtement adapté au liquide à pomper, par exemple un revêtement en matériau alimentaire dans le cas du pompage d'un liquide alimentaire. Il est possible de choisir le noyau 30 parmi un ensemble de noyaux à disposition,

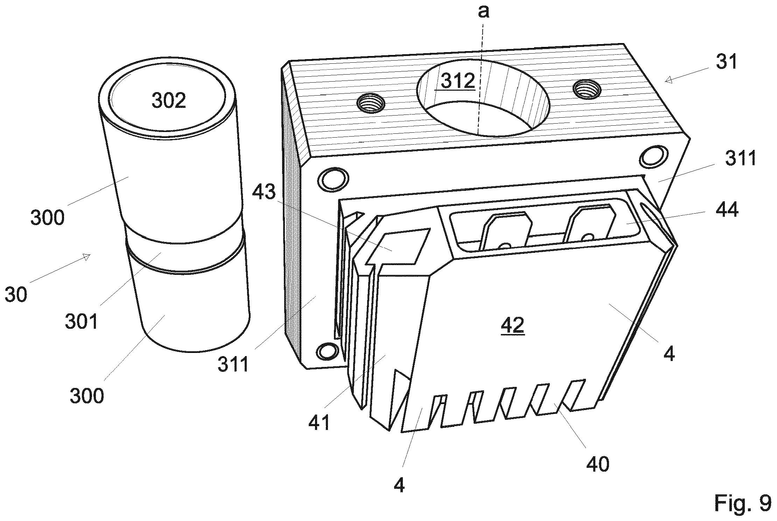

La figure 9 illustre un bobinage surmoulé 4 entouré par la boucle ferromagnétique 31 d'un cadre feuilleté. Un trou 312 dans cette boucle est aligné coaxialement avec le trou de la bobine surmoulée, et permet d'y insérer un noyau ferromagnétique au centre du bobinage. La boucle de cet exemple est formée d'un empilement de tôles parallèles à l'axe a de la bobine ; sa section est rectangulaire. Elle peut comporter des trous pour fixer la bobine à d'autres composants, ou pour y fixer les conduits d'entrée et de sortie de fluide. Le noyau 30 qui peut être inséré dans cette bobine peut être choisi par la même collection que dans le mode de réalisation de la figure 8.

La figure 10 déjà décrite illustre un exemple de pompe électromagnétique conventionnelle mais qui peut être équipée de la bobine de l'invention selon l'un des modes de réalisation décrits et revendiqués.

Dans le cadre du procédé de fabrication, l'une et/ou l'autre des étapes suivantes peut être mise en oeuvre :
- l'insertion d'un thermofusible ou d'un thermoswitch de protection du bobinage dans un logement (43) du surmoulage,
- l'insertion d'un connecteur amovible destiné au raccordement électrique de la bobine dans un logement (44) du surmoulage,
- la mise à disposition préalable d'au moins deux types de cadres, y compris un cadre comportant une boucle feuilletée et un cadre comprenant une boucle non feuilletée, et le choix dudit cadre parmi ces types de cadre,
- la mise à disposition préalable d'au moins deux types de noyaux avec des dimensions et/ou des positions d'entrefer différentes, et le choix dudit noyau parmi ces types de noyaux,
- la mise à disposition préalable d'au moins deux types de noyaux avec des matériaux différents, et le choix dudit noyau parmi ces types de noyau.

### Numéros de référence employés sur les figures

- 1: Bobine
- 2: Bobinage
- 20: Fil conducteur
- 21: Support cylindrique
- 3: Cadre
- 30: Noyau
- 300: Douille formant une portion du noyau
- 301: Douille en matériau non ferromagnétique formant un entrefer
- 302: Cylindre
- 31: Boucle
- 310: Trou de passage
- 311: Branches de la boucle
- 312: Trou axial traversant
- 4: Surmoulage
- 40: Ailettes
- 41: Angles arrondis du surmoulage
- 42: Bords du surmoulage
- 43: Logement pour thermofusible ou thermoswitch
- 44: Logement pour connecteur
- 5: Pompe électromagnétique
- 6: Conduit d'amenée de fluide
- 7: Conduit de sortie de fluide
- 70: Valves
- 8: Piston
- 9: Ressort

- a: Axe du noyau

### Numéros de référence employés sur les figures

- 1: Bobine
- 2: Bobinage
- 20: Fil conducteur
- 21: Support cylindrique
- 3: Cadre
- 30: Noyau
- 300: Douille formant une portion du noyau
- 301: Douille en matériau non ferromagnétique formant un entrefer
- 302: Cylindre
- 31: Boucle
- 310: Trou de passage
- 311: Branches de la boucle
- 312: Trou axial traversant
- 4: Surmoulage
- 40: Ailettes
- 41: Angles arrondis du surmoulage
- 42: Bords du surmoulage
- 43: Logement pour thermofusible ou thermoswitch
- 44: Logement pour connecteur
- 5: Pompe électromagnétique
- 6: Conduit d'amenée de fluide
- 7: Conduit de sortie de fluide
- 70: Valves
- 8: Piston
- 9: Ressort

- a: Axe du noyau

## Revendications

1. Bobine (1) pour pompe électromagnétique, la bobine ayant un axe longitudinal (a) comportant
un bobinage (2) constitué par un fil conducteur (20) enroulé autour d'un support cylindrique creux (21);
un cadre (3) en matériau ferromagnétique pour créer un chemin magnétique autour du bobinage (2), ledit cadre (3) comportant d'une part un noyau (30) ayant un axe longitudinal, deux extrémités axiales et étant muni d'une ouverture cylindrique capable de loger un piston mobile d'une pompe électromagnétique et ledit noyau (30) traversant ledit bobinage, et d'autre part une boucle (31) entourant le bobinage (2) et refermant le circuit magnétique entre les deux extrémités axiales de ce noyau, ledit noyau (30) traversant le bobinage (2) le long de l'axe longitudinal (a) de la bobine (1); et
un surmoulage (4) en matériau synthétique autour du bobinage
**caractérisé par le fait que** la surface externe du surmoulage (4) forme des ailettes de refroidissement (40) radiales.

2. Bobine selon la revendication 1, la section du surmoulage dans un plan perpendiculaire à l'axe de la bobine correspondant sensiblement à un carré avec des bords droits et des angles arrondis (41), la longueur radiale des ailettes de refroidissement (40) dans au moins deux desdits angles arrondis (41) étant plus grande que la longueur radiale des ailettes de refroidissement (40) au milieu des bords (42).

3. Bobine selon la revendication 1, le surmoulage (4) et le support cylindrique creux (21) formant un ensemble intégral.

4. Bobine selon la revendication 1, la section du noyau (30) dans un plan perpendiculaire à son axe (a) étant circulaire.

5. Bobine selon l'une des revendications 1 à 4, le surmoulage comportant un logement (43) pour un thermofusible ou pour un thermoswitch de protection du bobinage et/ou un logement (44) pour un connecteur amovible destiné au raccordement électrique de la bobine.

6. Bobine selon la revendication 5, le ou lesdits logements (43,44) étant prévus dans un coin du surmoulage.

7. Bobine selon l'une des revendications 1 à 6, la boucle (31) comportant quatre branches (311) formant un carré, la section des branches étant rectangulaires.

8. Bobine selon la revendication 7, la boucle (31) étant feuilletée ou bien la boucle (31) étant formée d'une tôle pliée et refermée sur elle-même.

9. Bobine selon l'une des revendications 7 et 8, au moins une des branches (311) de la boucle (31) étant munie d'un trou traversant selon l'axe de la bobine (312), le noyau (30) comportant une douille cylindrique creuse insérée dans ce trou.

10. Bobine selon la revendication 9, le noyau (30) étant amovible.

11. Bobine selon l'une des revendications 9 ou 10, le noyau (30) comportant deux douilles cylindriques creuses (300) en matériau ferromagnétique disposées coaxialement et séparées l'une de l'autre par une douille (301) coaxiale en matériau non ferromagnétique formant un entrefer.

12. Pompe électromagnétique comportant une bobine selon l'une des revendications 1 à 11 et un piston mobile à travers ledit noyau.

13. Procédé de fabrication de bobine pour pompe électromagnétique, la bobine ayant un axe longitudinal (a), le procédé comportant les étapes suivantes :
- bobinage d'un fil conducteur (20) autour d'un support cylindrique creux (21) ;
- surmoulage d'un matériau synthétique (4) autour du bobinage, la surface externe formant des ailettes de refroidissement (40) radiales;
- placement du bobinage surmoulé (4) dans un cadre (3) ferromagnétique comportant d'une part un noyau (30) ayant un axe longitudinal, deux extrémités axiales et étant muni d'une ouverture cylindrique capable de loger un piston mobile d'une pompe électromagnétique, et d'autre part une boucle (31), le cadre (3) créant un chemin magnétique autour du bobinage (2) ;
- insertion du noyau (30) du cadre à travers la boucle (31) et le bobinage le long de l'axe longitudinal (a) de la bobine (1),
entourage du bobinage surmoulé par la boucle du cadre et fermeture du circuit magnétique entre les deux extrémités axiales de ce noyau (30).

14. Kit de montage de pompe électromagnétique, comportant:
un piston ;
une bobine ayant un axe longitudinal (a) et comportant un bobinage (2) constitué par un fil conducteur enroulé autour d'un support cylindrique creux (21);
un surmoulage (4) en matériau synthétique autour du bobinage, et dont la surface externe forme des ailettes de refroidissement (40) radiales;
un ensemble de plusieurs noyaux (30) ferromagnétique à choix, chaque noyau ayant un axe longitudinal, deux extrémités axiales et étant capable de traverser le bobinage le long de l'axe longitudinal (a) de la bobine (1) et formant un cylindre creux dans lequel le piston est amené à coulisser, différents noyaux de l'ensemble se distinguant les uns des autres par leurs dimensions différentes et/ou, dans le cas où les noyaux sont conformes à la revendication 11, par les positions différentes d' entrefer,
au moins une boucle (31) ferromagnétique faisant partie avec le noyau d'un cadre ferromagnétique (3), la boucle (31) étant destinée à être montée autour du surmoulage (4) du bobinage (2) pour refermer le circuit magnétique entre les deux extrémités dudit noyau à choix.

15. Kit selon la revendication 14, comportant un ensemble de plusieurs dites cadres (3) à choix, y compris au moins un cadre comprenant une boucle feuilletée et au moins un cadre comprenant une boucle non feuilletée.

## Patentansprüche

1. Spule (1) für elektromagnetische Pumpe, wobei die Spule eine Längsachse (a) aufweist, aufweisend
eine Wicklung (2), die von einem Leitungsdraht (20) gebildet ist, der um einen hohlen zylindrischen Träger (21) gewickelt ist;
einen Rahmen (3) aus ferromagnetischem Material zur Erzeugung eines magnetischen Pfads um die Wicklung (2), wobei der Rahmen (3) einerseits einen Kern (30), der eine Längsachse, zwei Axialenden aufweist, und der mit einer zylindrischen Öffnung versehen ist, die geeignet ist, einen beweglichen Kolben einer elektromagnetischen Pumpe und den Kern (30), der die Wicklung durchquert, aufzunehmen, und andererseits eine Schleife (31), die die Wicklung (2) umgibt und den magnetischen Kreis zwischen den zwei Axialenden dieses Kerns wieder schließt, aufweist, wobei der Kern (30) die Wicklung (2) entlang der Längsachse (a) der Spule (1) durchquert; und
eine Überformung (4) aus Kunststoff um die Wicklung, **dadurch gekennzeichnet, dass** die Außenfläche der Überformung (4) radiale Kühlrippen (40) bildet.

2. Spule nach Anspruch 1, wobei der Querschnitt der Überformung in einer Ebene senkrecht zur Achse der Spule im Wesentlichen einem Quadrat mit geraden Rändern und abgerundeten Winkeln (41) entspricht, wobei die radiale Länge der Kühlrippen (40) an mindestens zwei der abgerundeten Winkel (41) größer als die radiale Länge der Kühlrippen (40) in der Mitte der Ränder (42) ist.

3. Spule nach Anspruch 1, wobei die Überformung (4) und der hohle zylindrische Träger (21) eine einstückige Anordnung bilden.

4. Spule nach Anspruch 1, wobei der Querschnitt des Kerns (30) in einer Ebene senkrecht zu seiner Achse (a) kreisförmig ist.

5. Spule nach einem der Ansprüche 1 bis 4, wobei die Überformung eine Aufnahme (43) für eine Thermosicherung oder für einen Thermoschalter zum Schutz der Wicklung und/oder eine Aufnahme (44) für einen abnehmbaren Konnektor zum elektrischen Anschluss der Spule aufweist.

6. Spule nach Anspruch 5, wobei die Aufnahme(n) (43, 44) in einer Ecke der Überformung vorgesehen sind.

7. Spule nach einem der Ansprüche 1 bis 6, wobei die Schleife (31) vier Schenkel (311) aufweist, die ein Quadrat bilden, wobei der Querschnitt der Schenkel rechteckig ist.

8. Spule nach Anspruch 7, wobei die Schleife (31) geschichtet ist oder die Schleife (31) von einem Blech gebildet ist, das gebogen und in sich geschlossen ist.

9. Spule nach einem der Ansprüche 7 und 8, wobei mindestens einer der Schenkel (311) der Schleife (31) mit einem Durchgangsloch entlang der Achse der Spule (312) versehen ist, wobei die Kern (30) eine hohle zylindrische Hülle umfasst, die in dieses Loch eingeführt ist.

10. Spule nach Anspruch 9, wobei der Kern (30) herausnehmbar ist.

11. Spule nach einem der Ansprüche 9 oder 10, wobei der Kern (30) zwei hohle zylindrische Hüllen (300) aus ferromagnetischem Material aufweist, die koaxial angeordnet und durch eine koaxiale Hülse (301) aus nicht ferromagnetischem Material, die einen Luftspalt bildet, voneinander getrennt sind.

12. Elektromagnetische Pumpe aufweisend eine Spule nach einem der Ansprüche 1 bis 11 und einen beweglichen Kolben durch den Kern.

13. Verfahren zur Herstellung einer Spule für eine elektromagnetische Pumpe, wobei die Spule eine Längsachse (a) aufweist, wobei das Verfahren die folgenden Schritte aufweist:
- Wickeln eines Leitungsdrahts (20) um einen hohlen zylindrischen Träger (21);
- Überformen eines Kunststoffs (4) um die Wicklung, wobei die Außenfläche radiale Kühlrippen (40) bildet;
- Platzieren der überformten Wicklung (4) in einen ferromagnetischen Rahmen (3), der einerseits einen Kern (30), der eine Längsachse, zwei Axialenden aufweist, und der mit einer zylindrischen Öffnung versehen ist, die geeignet ist, einen beweglichen Kolben einer elektromagnetischen Pumpe aufzunehmen, und andererseits eine Schleife (31) aufweist, wobei der Rahmen (3) einen magnetischen Pfad um die Wicklung (2) erzeugt;
- Einführen des Kerns (30) des Rahmens durch die Schleife (31) und die Wicklung entlang der Längsachse (a) der Spule (1),
Umgeben der überformten Wicklung von der Schleife des Rahmens und Schließen des magnetischen Kreises zwischen den zwei Axialenden dieses Kerns (30).

14. Montageset für elektromagnetische Pumpe, aufweisend:
einen Kolben;
eine Spule, die eine Längsachse (a) aufweist und eine Wicklung (2) aufweist, die von einem Leitungsdraht gebildet ist, der um einen hohlen zylindrischen Träger (21) gewickelt ist;
eine Überformung (4) aus Kunststoff um die Wicklung, und dessen Außenfläche radiale Kühlrippen (40) bildet;
eine Anordnung aus mehreren ferromagnetischen Kernen (30) zur Auswahl, wobei jeder Kern eine Längsachse, zwei Axialenden aufweist und imstande ist, die Wicklung entlang der Längsachse (a) der Spule (1) zu durchqueren und einen hohlen Zylinder bildet, in dem der Kolben zum Gleiten gebracht wird, wobei sich verschiedene Kerne der Anordnung durch ihre verschiedenen Abmessungen unterscheiden, und/oder, in dem Fall, dass die Kerne Anspruch 11 entsprechen, durch die verschiedenen Luftspaltpositionen, wobei mindestens eine ferromagnetische Schleife (31) mit dem Kern zu einem ferromagnetischen Rahmen (3) gehört, wobei die Schleife (31) dazu bestimmt ist, um die Überformung (4) der Wicklung (2) angebracht zu sein, um den magnetischen Kreis zwischen den zwei Enden des Kerns zur Auswahl wieder zu schließen.

15. Set nach Anspruch 14, aufweisend eine Anordnung aus mehreren der Rahmen (3) zur Auswahl, einschließlich mindestens eines Rahmens, der eine geschichtete Schleife umfasst, und mindestens eines Rahmens, der eine nicht geschichtete Schleife umfasst.

## Claims

1. A coil (1) for electromagnetic pump, comprising
a winding (2) consisting of a conductive wire (20) wound around a hollow cylindrical support (21);
a frame (3) made of ferromagnetic material for creating a magnetic path around the winding (2), said frame (3) comprising, on the one hand, a core (30) having a longitudinal axis, two axial ends and being provided with a cylindrical opening able to accommodate a mobile piston of an electromagnetic pump and said core (30) passing through said winding, and, on the other hand, a loop (31) around the winding (2) to close the magnetic circuit between the two axial ends of this core ; said core (30) passing through the winding (2) along the longitudinal axis (a) of the coil (1); and
an overmolding (4) of synthetic material around the winding
**characterized by** the fact that the outer surface of the overmolding (4) forms radial cooling fins (40).

2. The coil as claimed in claim 1, the section of the overmolding in a plane at right angles to the axis of the core corresponding substantially to a square with rectilinear edges and rounded corners (41), the radial length of the cooling fins (40) in at least two of said rounded corners (41) being larger than the radial length of the cooling fins (40) in the middle of the edges (42).

3. The coil as claimed in claim 1, the overmolding (4) and the hollow cylindrical support (21) forming an integral assembly.

4. The coil as claimed in claim 1, the section of the core (30) in a plane at right angles to its axis (a) being circular.

5. The coil as claimed in any of claims 1 to 4, the overmolding comprising a recess (43) for a thermal fuse or for a thermal switch protecting the winding and/ora recess (44) for a removable connector intended for the electrical connection of the coil.

6. The coil as claimed in claim 5, said recess or recesses (43, 44) being provided in a corner of the overmolding.

7. The coil as claimed in any of claims 1 to 6, the loop (31) comprising four branches (311) forming a square, the section of the branches being rectangular.

8. The coil as claimed in claim 7, the loop (31) being laminated or the loop (31) being formed by a metal plate folded and closed on itself.

9. The coil as claimed in any of claims 7 and 8, at least one of the branches (311) of the loop (31) being provided with a through-hole on the axis of the coil (312), the core (30) comprising a hollow cylindrical bush inserted into this hole.

10. The coil as claimed in claim 9, the core (30) being removable.

11. The coil as claimed in any of claims 9 and 10, the core (30) comprising two hollow cylindrical bushes (300) made of ferromagnetic material arranged coaxially and separated from one another by a coaxial bush (301) made of non-ferromagnetic material and forming an air gap.

12. An electromagnetic pump comprising a coil as claimed in any of claims 1 to 11 and a piston that is mobile through said core.

13. A coil manufacturing method for electromagnetic pump, the coil having a longitudinal axis (a), the method comprising the following steps :
- winding a conductive wire (20) around a cylindrical support (21);
- overmolding a synthetic material (4) around the winding, the outer surface forming radial cooling fins (40);
- placing the overmolded winding (4) in a ferromagnetic frame (3) comprising, on the one hand, a core (30) having a longitudinal axis, two axial ends and being provided with a cylindrical opening able to accommodate a mobile piston of an electromagnetic pump, and, on the other hand, a loop (31), the frame (3) creating an electromagnetic path around the winding (2);
- inserting the core (30) of the frame through the frame (31) and the winding along the longitudinal axis (a) of the coil (1),
- surrounding the overmolded winding by the loop of the frame and closing of the ferromagnetic circuit between the two ends of this core (30).

14. An electromagnetic pump mounting kit, comprising:
a piston;
a coil having a longitudinal axis (a) and comprising a winding (2) consisting of a conductive wire wound around a hollow cylindrical support (21);
an overmolding (4) of synthetic material around the winding, and which outer surface of the overmolding (4) forms radial cooling fins (40);
a set of several ferromagnetic cores (30) for choice, each core having a longitudinal axis, two axial ends and being able to pass through the winding along the longitudinal axis (a) of the coil (1) and forming a hollow cylinder in which the piston is made to slide, different cores of the set being distinguished from one another by the dimension and/or, when the cores are according to claim 11, by the position of an air gap,
at least one ferromagnetic loop (31) being part, with the core of a ferromagnetic frame (3), the loop (31) being designed to be mounted around the overmolding (4) of the winding (2) to close the magnetic circuit between the two ends of this core for choice.

15. The kit as claimed in claim 14, comprising a set of several said frames (31) for choice, including at least one frame comprising a laminated loop and at least one frame comprising a non-laminated loop.
